# EUROPEAN PATENT APPLICATION

(11) **EP 3 340 604 A1**
(43) Date of publication of application: **27.06.2018**
(21) Application number: 16836482.6
(22) Date of filing: 16.06.2016
(51) Int. Cl.: H04N 5/232

(54) **METHOD AND APPARATUS FOR OBTAINING FOCAL POINT**

(30) Priority: 19.08.2015 CN 201510511245
(71) Applicant: ZTE Corporation, Shenzhen, Guangdong 518057 (CN)
(72) Inventor: ZHU, Yufei, Shenzhen Guangdong 518057 (CN)
(74) Representative: Taor, Simon Edward William
(86) International application number: PCT/CN2016/086018
(87) International publication number: WO 2017/028618

(57) **Abstract**

A method for obtaining a focal point comprises: after two cameras acquire a viewfinder picture, receiving a focusing point selected by a user from the viewfinder picture; and determining a focusing distance between the two cameras according to the position of the focusing point.

## Description

### TECHNICAL FIELD

The present application relates to, but is not limited to, the field of communications, and more particularly, to a method and apparatus for acquiring a focal point.

### BACKGROUND

With the development of camera functions, during a close-range focusing, due to a shallow depth of field, such as complex frames like flowering shrubs and twigs, a single-point focusing can only ensure one of the positions to be focused, while a multi-point focusing can better ensure the focusing accuracy. On the other hand, for fixed multi-point focusing, the setting of the positions of the focusing points cannot be dynamically adjusted, and when focusing on some special compositions, there are still some limitations. A specialized focusing module is usually adopted in a single lens reflex to dispose focusing pixels in different positions, so as to implement multi-point focusing by means of phase detection auto focus. The focusing points are all fixed.

The positions of the focusing points in the multi-point focusing technologies in the related art are generally fixed.

### SUMMARY

The following is a summary of the subject described in detail herein. This summary is not intended to limit the protection scope of the claims.

The present disclosure provides a method and an apparatus for acquiring a focal point to achieve dynamic focusing based on a dual-camera.

The positions of the focusing points in the multi-point focusing technologies in the related art are generally fixed, while the multi-point focusing positions achieved in the present application are variable.

The embodiments of the present disclosure provide a method for acquiring focal points, including:
after a dual-camera acquires a viewing frame, receiving a focusing point selected on the viewing frame by a user; and
determining a focus distance between the dual-camera according to a position of the focusing point.

In an embodiment, the determining the focus distance of the dual-camera according to the position of the focusing point includes:
acquiring the number of the focusing point among the focusing point selected by the user which is within a field depth range corresponding to the position of each focusing point; and
determining the focus distance of the dual-camera according to the number of the focusing point.

In an embodiment, the acquiring the number of the focusing point among the focusing point selected by the user which is within the field depth range corresponding to each focusing point includes:
acquiring a physical distance between each focusing point and the dual-camera; and
determining a focus distance corresponding to each focusing point according to the physical distance between each focusing point and the dual-camera;
determining the field depth range corresponding to the position of each focusing point according to the focus distance corresponding to each focusing point; and
acquiring the number of the focusing point among the focusing point selected by the user in each field depth range.

In an embodiment, the determining the focus distance of the dual-camera according to the number of the focusing point includes:
selecting the focusing point with a maximum number of the focusing point in the field depth range as a target focusing point; and
determining a focus distance corresponding to the target focusing point as the focus distance of the dual-camera.

In an embodiment, the determining the focus distance of the dual-camera according to the number of the focusing point includes:
acquiring a physical distance between each focusing point and the dual-camera; and
determining the focus distance of the dual-camera according to the number of the focusing point and the physical distance.

In an embodiment, the determining the focus distance of the dual-camera according to the number of the focusing point and the physical distance includes:
when the number of the focusing point with the maximum number of the focusing point in the field depth range is at least two, selecting the focusing point with a shortest physical distance to the dual-camera as a target focusing point; and
determining the focus distance corresponding to the target focusing point as the focus distance of the dual-camera.

In an embodiment, the method further includes:
when detecting that at least one of the position and the number of the focusing point selected on the viewing frame by the user is changed, redetermining the focus distance of the dual-camera.

The embodiments of the present disclosure also provide a computer readable storage medium storing a computer-executable instruction which, when being executed, implements the above-mentioned method for acquiring a focal point.

The embodiments of the present disclosure also provide an apparatus for acquiring a focal point, including:
a receiving module configured to, after a dual-camera acquires a viewing frame, receive a focusing point selected on the viewing frame by a user; and
a determination module configured to determine a focus distance of the dual-camera according to a position of the focusing point.

In an embodiment, the determination module includes:
a first acquisition submodule configured to acquire the number of the focusing point among the focusing point selected by the user which is within a field depth range corresponding to the position of each focusing point; and
a determination submodule configured to determine the focus distance of the dual-camera according to the number of the focusing point.

In an embodiment, the first acquisition submodule includes:
a first acquisition unit configured to acquire a physical distance between each focusing point and the dual-camera; and
a first determination unit configured to determine a focus distance corresponding to each focusing point according to the physical distance between each focusing point and the dual-camera;
a second determination unit configured to determine the field depth range corresponding to the position of each focusing point according to the focus distance corresponding to each focusing point; and
a second acquisition unit configured to acquire the number of the focusing point among the focusing point selected by the user which is within each field depth range.

In an embodiment, the determination submodule includes:
a first selection unit configured to select the focusing point with a maximum number of the focusing point in the field depth range as a target focusing point; and
a third determination unit configured to determine the focus distance corresponding to the target focusing point as the focus distance of the dual-camera.

In an embodiment, the determination submodule includes:
a third acquisition unit configured to acquire a physical distance between each focusing point and the dual-camera; and
a fourth determination unit configured to determine the focus distance of the dual-camera according to the number of the focusing point and the physical distance.

In an embodiment, the fourth determination unit includes:
a second selection unit configured to when the number of the focusing point with the maximum number of the focusing point in the field depth range is at least two, select the focusing point with a shortest physical distance to the dual-camera as a target focusing point; and
a fifth determination unit configured to determine the focus distance corresponding to the target focusing point as the focus distance of the dual-camera.

In an embodiment, the apparatus further includes:
a control module configured to, when detecting that at least one of the position and/or the number of the focusing point selected on the viewing frame by the user is changed, redetermine the focus distance of the dual-camera.

According to the embodiments of the present disclosure, the focusing position of the cameras is determined by using the positions of at least two focusing points, so as to achieve the purpose of dynamically adjusting the focus distance and solve the problem of not ideal focusing position caused by fixing the focusing point in the single-point or multi-point focusing, and the user only needs to set the focusing point on the position concerned during focusing for photographing. The present disclosure is easy to operate and is more aligned with the operating habits of the user.

Other aspects will become apparent upon reading and understanding the drawings and detailed description.

### BRIEF DESCRIPTION OF THE DRAWINGS

Fig. 1 is a flow chart of a method for acquiring a focal point provided by the embodiment of the present disclosure;
Fig. 2 is a flow chart of a method for performing multi-point focusing based on a dual-camera mobile phone provided by the embodiment of the present disclosure;
Fig. 3 is a schematic diagram of acquiring a position of a focusing point provided by the embodiment of the present disclosure;
Fig. 4 is a schematic diagram of the positions of the focusing points provided by the embodiment of the present disclosure;
Fig. 5 is a schematic diagram of positions of preset focusing points provided by the embodiment of the present disclosure; and
Fig. 6 is a structural diagram of an apparatus for acquiring a focal point provided by the embodiment of the present disclosure.

### DETAILED DESCRIPTION

The embodiments of the present disclosure will be described hereinafter with reference to the accompanying drawings. It should be noted that, in case of no conflict, the embodiments in the present application and various manners in the embodiments may be combined with each other.

In view of an algorithm for acquiring a focal point, since a distance may be calculated for any position on a frame, the position of the focusing point is adjustable. Therefore, how to realize dual-camera based dynamic focusing is an urgent problem to be solved.

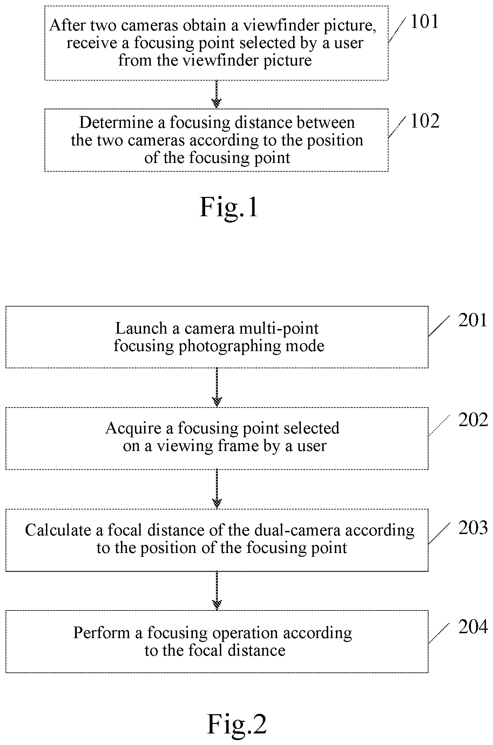

Fig. 1 is a flow chart of a method for acquiring a focal point provided by the embodiments of the present disclosure. As shown in Fig. 1, the method includes the following steps.

In step 101, after double cameras (i.e., dual-camera) acquire a viewing frame, a focusing point selected from the viewing frame by a user is received.

The number of the focusing point selected by the user may be one, or may be at least two.

The user may arbitrarily select the focusing point on the viewing frame.

In step 102, a focus distance (i.e., a focusing point distance) of the dual-camera is determined according to a position of the focusing point.

According to the method provided by the embodiments of the present disclosure, a focusing position of the cameras is determined by using the position of the focusing point, so as to achieve the purpose of dynamically adjusting the focus distance and solve the problem of undesirable focusing position caused by fixing the focusing point in the single-point or multi-point focusing, and the user only needs to set the focusing point on the position concerned during focusing for photographing, which is easy to operate and is conform to operating habits of common users.

In this method:
a focus distance is, for instance, the focusing point distance.

A mobile terminal may include dual cameras, and the positions of the dual cameras are fixed. The dual cameras may be used to capture images and calculate an actual distance from each position in the frame to the cameras. The viewing frame is displayed through a display screen in real time. The position of the focusing point dynamically set by the user is acquired through a touch screen, and the position of the focusing point acquired is used to calculate the focal distance of the dual cameras.

In an embodiment, the determining the focus distance of the dual-camera according to the position of the focusing point may include:
acquiring the number of the focusing point among the focusing point selected by the user which is within a field depth range corresponding to the position of each focusing point; and
determining the focus distance of the dual-camera according to the number of the focusing point.

By determining the focus distance of dual-camera according to the number of the focusing point, it is convenient for the user to shoot images more aligned with the user's needs and improve the photographing accuracy.

In an embodiment, the acquiring the number of the focusing point among the focusing point selected by the user which is within the field depth range corresponding to each focusing point may include:
acquiring a physical distance between each focusing point and the dual-camera; and
determining a focus distance corresponding to each focusing point according to the physical distance between each focusing point and the dual-camera;
determining a field depth range corresponding to the position of each focusing point according to the focus distance corresponding to each focusing point; and
acquiring the number of the focusing point among the focusing points selected by the user which is within each field depth range.

In an embodiment, a difference between the focus distance corresponding to each focusing point and the physical distance of each focusing point may be minimum. Alternatively, other numerical values may be selected as the focus distance of the focusing point.

In an embodiment, the determining the focus distance of the dual-camera according to the number of the focusing point may include:
selecting the focusing point with a maximum number of the focusing point in the field depth range as a target focusing point; and
determining a focus distance corresponding to the target focusing point as the focus distance of the dual-camera.

By selecting the focusing point with the maximum number of the focusing point in the field depth range as the target focusing point, the photographed picture contains the maximum focusing point selected by the user, which can effectively improve the photographing effect.

In an embodiment, the determining the focus distance of the dual-camera according to the number of the focusing point may include:
acquiring a physical distance between each focusing point and the dual-camera; and
determining the focus distance of the dual-camera according to the number of the focusing point and the physical distance.

By determining the focus distance according to the physical distance, the size of the photographed image can be ensured, and thus the photographing effect can be ensured.

In an embodiment, the determining the focus distance of the dual-camera according to the number of the focusing point and the physical distance may include:
when the number of the focusing point with the maximum number of the focusing points in the field depth range is at least two, selecting the focusing point with a shortest physical distance to the dual-camera as the target focusing point; and
determining the focus distance corresponding to the target focusing point as the focus distance of the dual-camera.

In an embodiment, the method may further include:
when detecting that at least one of the position and the number of the focusing point selected on the viewing frame by the user is changed, redetermining the focus distance of the dual-camera.

In an embodiment, after starting a photographing function of the mobile terminal and entering a multi-point focusing photographing mode, when the camera is aligned with a photographing object, the viewing frame will be displayed on the display screen in real time, and at this moment, the user may click on the display screen to select the positions of the focusing points with varying quantity, and accordingly, the focal distance may be calculated according to the position of the focusing point.

In an embodiment, when the user clicks to select or cancel one focusing point, the focal distance may be recalculated.

It can be seen from the above that one focus distance can be found out through the embodiments of the present disclosure, so that the total number of the focusing points falling within the field depth range of the camera corresponding to the current focus distance is maximum and the focus distance is shortest. After the calculation of the focus distance is completed, a motor in the camera may be pushed to perform focusing; and each completion of focusing may be regarded as completion of one focusing cycle. The user may perform the focusing cycle for any times.

Fig. 2 is a flow chart of a method for performing multi-point focusing based on a dual-camera mobile phone provided by the embodiment of the present disclosure. As shown in Fig. 2, the method may include the following steps.

In step 201, a camera multi-point focusing photographing mode is launched.

In step 202, a focusing point selected on a viewing frame by a user is acquired.

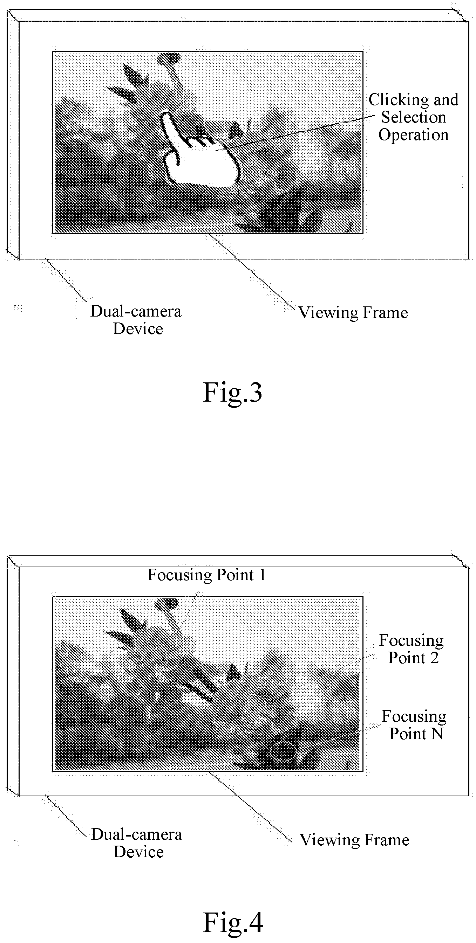

Fig. 3 is a schematic diagram of acquiring a position of the focusing point provided by the embodiment of the present disclosure. As shown in Fig. 3, for a needed position, the position of the focusing point may be set or cancelled by clicking on a touch screen, thus it may be determined whether there is a newly set focusing point or whether the set focusing point is cancelled.

After the user performs the operation of setting or cancelling the focusing point, the focusing point, which has been set but not cancelled, may be determined as the position of the focusing point finally selected by the user, the details may be seen in Fig. 4. Fig. 4 is a schematic diagram of the positions of the focusing points provided by the embodiment of the present disclosure.

In step 203, the focal distance of the dual-camera is calculated according to the positions of the focusing points.

In step 204, a focusing operation is performed according to the focal distance.

The focusing may be implemented by pushing a camera motor, and then a next operation of the user may be waited for again.

The calculation of the focal distance is illustrated hereinafter with reference to an example.

In the example, the focal distance may be calculated through the following steps.

In step A01, the positions of the focusing points set by the user and the actually measured physical distances between the focusing points and the camera are inputted. The focusing points and the physical distances may be one-to-one correspondence.

In step A02, the focusing points are sorted according to the corresponding physical distances, so that the focusing points are arranged by the corresponding physical distances from small to large. The focusing points may be denoted as P[1], P[2], ..., P[n], and the corresponding physical distances are denoted as L[1], L[2], ..., L[n], then there may be L[1]≤L[2]≤...≤L[n].

In step A03, a specific focusing position f has a specific corresponding field depth range fmin-fmax according to the optical principle of the camera, and all the focusing points within the field depth range may be deemed as actual focusing points. A specific focus distance f[m] may be found out for any focusing point P[m] (the corresponding physical distance thereof is denoted as L[m], m = 1, 2, ..., n), so that the difference between f[m] and L[m] is minimum. The field depth range at this moment may be denoted as Fmin∼Fmax, and there may be Fmin≤L[m]≤Fmax at this moment. The physical distances L[1], L[2], ..., L[n] of all the focusing points may be traversed; and when the physical distance of the focusing point falls within Fmin∼Fmax, it may be deemed that this focusing point is in the focusing range, the number of all the focusing point within the focusing range at this moment is recorded as x[m], and serial numbers of the focusing points within the focusing range are recorded.

In step A04, the above-mentioned steps are performed on all the focusing points, then one digital sequence x[1], x[2], ..., x[n] for the number of the focusing points may be obtained; the maximum x[max] in the sequence may be founded out by comparison, and the corresponding focus distance f[max] of the corresponding focusing point P[max] corresponding to the maximum value x[max] is the focus distance calculated. If there are multiple maximum values, then the shortest focus distance among the focus distances corresponding to the maximum values may be selected as the finally determined focus distance.

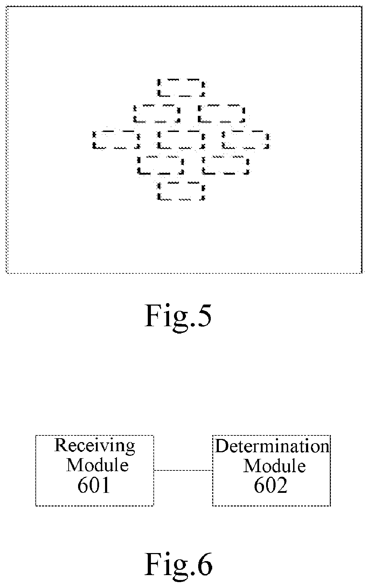

The positions of the focusing points may be preset in specific positions, and the details are seen in Fig. 5. Fig. 5 is a schematic diagram of the preset positions of the focusing points provided by the embodiment of the present disclosure. Alternatively, the user may add or cancel the focusing points according to the actual focusing needs, which enable the user to operate more easily.

It can be seen from the above that the method for dynamically adjusting the multi-point focusing positions provided by the embodiment of the present disclosure solves the problem in the related art of not ideal focusing position caused by fixing the focusing points under the single-point or multi-point focusing manner. The user only needs to set the focusing points on the position concerned during focusing for photographing, so the operation is easy and is more aligned with the operating habits of the user.

The embodiments of the present disclosure also provide a computer readable storage medium storing a computer-executable instruction which, when being executed, implements the above-mentioned method for acquiring a focal point.

Fig. 6 is a structural diagram of an apparatus for acquiring a focal point provided by the embodiment of the present disclosure. The apparatus, as shown in Fig. 6, includes:
a receiving module 601 configured to, after a dual-camera acquires a viewing frame, receive a focusing point selected on the viewing frame by a user; and
a determination module 602 configured to determine a focus distance of the dual-camera according to a position of the focusing point.

In an embodiment, the determination module 602 may include:
a first acquisition submodule configured to acquire the number of the focusing point among the focusing point selected by the user which is within a field depth range corresponding to the position of each focusing point; and
a determination submodule configured to determine the focus distance of the dual-camera according to the number of the focusing point.

In an embodiment, the first acquisition submodule may include:
a first acquisition unit configured to acquire a physical distance between each focusing point and the dual-camera; and
a first determination unit configured to determine a focus distance corresponding to each focusing point according to the physical distance between each focusing point and the dual-camera;
a second determination unit configured to determine a field depth range corresponding to the position of each focusing point according to the focus distance corresponding to each focusing point; and
a second acquisition unit configured to acquire the number of the focusing point among the focusing point selected by the user which is within each field depth range.

In an embodiment, a difference between the focus distance corresponding to the focusing point determined by the first determination unit and the physical distance of the focusing point may be minimum.

In an embodiment, the determination submodule may include:
a first selection unit configured to select the focusing point with a maximum number of the focusing point in the field depth range as a target focusing point; and
a third determination unit configured to determine the focus distance corresponding to the target focusing point as the focus distance of the dual-camera.

In an embodiment, the determination submodule may include:
a third acquisition unit configured to acquire a physical distance between each focusing point and the dual-camera; and
a fourth determination unit configured to determine the focus distance of the dual-camera according to the number of the focusing point and the physical distance.

In an embodiment, the fourth determination unit may include:
a second selection unit configured to, when the number of the focusing point with the maximum number of the focusing point in the field depth range is at least two, select the focusing point with a shortest physical distance to the dual-camera as a target focusing point; and
a fifth determination unit configured to determine a focus distance corresponding to the target focusing point as the focus distance of the dual-camera.

In an embodiment, the apparatus may also include:
a control module configured to, when detecting that at least one of the position and the number of the focusing point selected from the viewing frame by the user is changed, redetermine the focus distance of the dual-camera.

According to the apparatus provided by the embodiments of the present disclosure, the focusing position of the cameras is determined by using the positions of at least two focusing points, so as to achieve the purpose of dynamically adjusting the focus distance and solve the problem of not ideal focusing position caused by fixing the focusing point in the single-point or multi-point focusing, and the user only needs to set the focusing points on the position concerned during focusing for photographing, which is easy to operate and is more aligned with the operating habits of common users.

Those having ordinary skills in the art may understand that all or part of the steps of the foregoing embodiments may be implemented by using a computer program flow which may be stored in a computer readable storage medium and executed on a corresponding hardware platform (such as system, equipment, apparatus, device, processor, etc.), and when being executed, includes one or a combination of the steps of the method embodiment.

In an embodiment, all or part of the steps in the above embodiments may also be implemented by using integrated circuits. These steps may be separately manufactured as individual integrated circuit modules, or multiple modules or steps therein may be made into a single integrated circuit module.

The apparatuses/functional module/functional units in the foregoing embodiments can be implemented by universal computing devices, which can be concentrated on a single computing device or distributed on the network composed of multiple computing devices.

The apparatuses/functional module/functional units in the foregoing embodiments may be stored in a computer-readable storage medium if being implemented in the form of a software functional module and sold or used as an independent product. The above-mentioned computer-readable storage medium may be a read-only memory, a magnetic disk, an optical disk, or the like.

Those having ordinary skills in the art should understand that they may modify or replace the technical solutions of the present application without departing from the spirit and scope of the technical solutions of the present application. The protection scope of the present application is subject to the scope defined by the claims.

### INDUSTRIAL APPLICABILITY

According to the embodiments of the present disclosure, the focusing position of the cameras is determined by using the positions of at least two focusing points, so as to achieve the purpose of dynamically adjusting the focus distance and solve the problem of not ideal focusing position caused by fixing the focusing point in the single-point or multi-point focusing, and the user only needs to set the focusing points on the position concerned during focusing for photographing, which is easy to operate and is more aligned with the operating habits of the user.

## Claims

1. A method for acquiring a focal point, comprising:
after a dual-camera acquires a viewing frame, receiving a focusing point selected on the viewing frame by a user; and
determining a focus distance of the dual-camera according to a position of the focusing point.

2. The method according to claim 1, wherein the determining the focus distance of the dual-camera according to the position of the focusing point comprises:
acquiring the number of the focusing point among the focusing point selected by the user which is within a field depth range corresponding to the position of each focusing point; and
determining the focus distance of the dual-camera according to the number of the focusing point.

3. The method according to claim 2, wherein the acquiring the number of the focusing point among the focusing point selected by the user which is within the field depth range corresponding to each focusing point, comprises:
acquiring a physical distance between each focusing point and the dual-camera;
determining a focus distance corresponding to each focusing point according to the physical distance between each focusing point and the dual-camera;
determining a field depth range corresponding to the position of each focusing point according to the focus distance corresponding to each focusing point; and
acquiring the number of the focusing point among the focusing point selected by the user which is within each field depth range.

4. The method according to claim 2, wherein the determining the focus distance of the dual-camera according to the number of the focusing point, comprises:
selecting the focusing point with a maximum number of the focusing point in the field depth range as a target focusing point; and
determining the focus distance corresponding to the target focusing point as the focus distance of the dual-camera.

5. The method according to claim 2 or 3, wherein the determining the focus distance of the dual-camera according to the number of the focusing point, comprises:
acquiring a physical distance between each focusing point and the dual-camera; and
determining the focus distance of the dual-camera according to the number of the focusing point and the physical distance.

6. The method according to claim 5, wherein the determining the focus distance of the dual-camera according to the number of the focusing point and the physical distance comprises:
when the number of the focusing point with the maximum number of the focusing point in the field depth range is at least two, selecting the focusing point with a shortest physical distance to the dual-camera as a target focusing point; and
determining the focus distance corresponding to the target focusing point as the focus distance of the dual-camera.

7. The method according to claim 1, further comprising:
when detecting that at least one of the position and the number of the focusing point selected on the viewing frame by the user is changed, redetermining the focus distance of the dual-camera.

8. An apparatus for acquiring a focal point, comprising:
a receiving module configured to, after a dual-camera acquires a viewing frame, receive a focusing point selected on the viewing frame by a user; and
a determination module configured to determine a focus distance of the dual-camera according to a position of the focusing point.

9. The apparatus according to claim 8, wherein the determination module comprises:
a first acquisition submodule configured to acquire the number of the focusing point among the focusing point selected by the user which is within a field depth range corresponding to the position of each focusing point; and
a determination submodule configured to determine the focus distance of the dual-camera according to the number of the focusing point.

10. The apparatus according to claim 9, wherein the first acquisition submodule comprises:
a first acquisition unit configured to acquire a physical distance between each focusing point and the dual-camera;
a first determination unit configured to determine a focus distance corresponding to each focusing point according to the physical distance between each focusing point and the dual-camera;
a second determination unit configured to determine the field depth range corresponding to the position of each focusing point according to the focus distance corresponding to each focusing point; and
a second acquisition unit configured to acquire the number of the focusing point among the focusing point selected by the user which is within each field depth range.

11. The apparatus according to claim 9, wherein the determination submodule comprises:
a first selection unit configured to select the focusing point with a maximum number of the focusing point in the field depth range as a target focusing point; and
a third determination unit configured to determine the focus distance corresponding to the target focusing point as the focus distance of the dual-camera.

12. The apparatus according to claim 9 or 10, wherein the determination submodule comprises:
a third acquisition unit configured to acquire a physical distance between each focusing point and the dual-camera; and
a fourth determination unit configured to determine the focus distance of the dual-camera according to the number of the focusing point and the physical distance.

13. The apparatus according to claim 12, wherein the fourth determination unit comprises:
a second selection unit configured to, when the number of the focusing point with the maximum number of the focusing point in the field depth range is at least two, select the focusing point with a shortest physical distance to the dual-camera as a target focusing point; and
a fifth determination unit configured to determine the focus distance corresponding to the target focusing point as the focus distance of the dual-camera.

14. The apparatus according to claim 8, further comprising:
a control module configured to, when detecting that at least one of the position and the number of the focusing point selected on the viewing frame by the user is changed, redetermine the focus distance of the dual-camera.
